# EUROPÄISCHE PATENTANMELDUNG

(11) **EP 4 768 221 A1**
(43) Veröffentlichungstag der Anmeldung: **01.07.2026**
(21) Anmeldenummer: 25211733.8
(22) Anmeldetag: 28.10.2025
(51) Int. Cl.: B29C 45/16, B29C 45/57, B29C 37/00, B29C 45/00

(54) **VERFAHREN ZUR HERSTELLUNG EINES BESCHICHTETEN VERKLEIDUNGSTEILS EINES FAHRZEUGS**

(30) Priorität: 17.12.2024 DE 102024138248
(71) Anmelder: RESRG Automotive SE & Co. KG, 95111 Rehau (DE)
(72) Erfinder: Reichstein, Johann, 95448 Bayreuth (DE)
(74) Vertreter: Grünecker Patent- und Rechtsanwälte PartG mbB

(57) **Zusammenfassung**

Die Erfindung betrifft ein Verfahren zur Herstellung eines beschichteten Verkleidungsteils (1) eines Fahrzeugs, wobei zwei unterschiedliche Gussformen (2, 6) zur Herstellung des beschichteten Verkleidungsteils (1) genutzt werden. Der Elastizitätsmodul der metallischen Werkstoffe der die unterschiedlichen Gussformen (2, 6) bildenden Formhälften (5, 5', 8) unterscheidet sich hierbei.

## Beschreibung

Die vorliegende Erfindung betrifft ein Verfahren zur Herstellung eines beschichteten Verkleidungsteils eines Fahrzeugs, insbesondere eines Außenverkleidungsteils eines Fahrzeugs, wobei das Verfahren die folgenden Schritte umfasst:
- Bereitstellen einer ersten Gussform zur Herstellung eines thermoplastischen Trägerteils des Verkleidungsteils, wobei die Gussform eine erste Formhälfte und wenigstens eine zweite Formhälfte aufweist, die zusammen eine Trägerteilkavität ausbilden, die der Geometrie und den Abmessungen des herzustellenden Trägerteils entspricht, wobei zumindest die zweite Formhälfte aus einem metallischen Werkstoff besteht, der ein Elastizitätsmodul mit einem Wert zwischen 190 GPa bis 230 GPa aufweist;
- Bereitstellen einer weiteren Gussform zur Herstellung einer duroplastischen Beschichtung auf dem Trägerteil, wobei hierfür eine dritten Formhälfte vorgesehen ist, die zusammen mit der zweiten Formhälfte eine Beschichtungskavität ausbildet, die der Geometrie und den Abmessungen des mit der Beschichtung versehenen Trägerteils entspricht;
- Einspritzen einer plastifizierten, thermoplastischen Zusammensetzung in die Trägerteilkavität der ersten Gussform zur Herstellung des Trägerteils, wobei die thermoplastische Zusammensetzung in der Trägerteilkavität abkühlt und zu dem Trägerteil erstarrt;
- Verbringen der zweiten Formhälfte zu der dritten Formhälfte zur Ausbildung der weiteren Gussform, wobei das hergestellte Trägerteil an der zweiten Formhälfte und innerhalb der Beschichtungskavität angeordnet ist oder wird;
- Aufbringen der duroplastischen Beschichtung durch Einspritzen einer reaktiven duroplastischen Zusammensetzung in die Beschichtungskavität, wobei die duroplastische Zusammensetzung auf der Oberfläche des Trägerteils zu der duroplastischen Beschichtung auspolymerisiert und sich mit dem Trägerteil verbindet;
- Entformen des beschichteten Verkleidungsteils aus der weiteren Gussform.

Entsprechende Verfahren sind in den Dokumenten DE 196 50 854 C1,
WO 2006/072366 A1 und WO 2024/017706 A1 beschrieben. Das Einspritzen der reaktiven duroplastischen Zusammensetzung in die Beschichtungskavität erfolgt hierbei durch ein RIM-Verfahren (Reaction-Injection-Molding), ein In-Mould-Coating (IMC) oder ein Direct-Coating (DC) Verfahren. Dies birgt den Nachteil, dass zum Ausgleich des Volumenschwunds bei der Auspolymerisation der duroplastischen Zusammensetzung zusätzlich ein sogenannter Prägevorgang erforderlich ist, um ein Bauteil mit verminderten Eigenspannungen und ausreichender Dimensionstreue herzustellen. Die Schwindung bzw. der Volumenschwund wird dabei nicht mehr dadurch kompensiert, dass zusätzliches Material in die Kavität gepresst wird, sondern durch einen werkzeugseitigen Verdrängungsvorgang. Spritzpräge-Werkzeuge müssen hierfür ein variables Kavitätenvolumen besitzen, das nach dem Einspritzen mechanisch verkleinert wird. Hierfür sind jedoch sehr aufwendige Gussformen mit beweglichen Teilen notwendig.

Aufgabe der vorliegenden Erfindung ist es, ein alternatives Verfahren anzugeben, bei dem der Volumenschwund bei der Auspolymerisation der duroplastischen Zusammensetzung ohne einen Prägevorgang und ohne eine aufwendige Gussform kompensiert wird.

Diese Aufgabe wird vorliegend gelöst durch ein nachfolgend beschriebenes Verfahren:
Verfahren zur Herstellung eines beschichteten Verkleidungsteils eines Fahrzeugs, insbesondere eines Außenverkleidungsteils eines Fahrzeugs, wobei das Verfahren die folgenden Schritte umfasst:
   - Bereitstellen einer ersten Gussform zur Herstellung eines thermoplastischen Trägerteils des Verkleidungsteils, wobei die Gussform eine erste Formhälfte und wenigstens eine zweite Formhälfte aufweist, die zusammen eine Trägerteilkavität ausbilden, die der Geometrie und den Abmessungen des herzustellenden Trägerteils entspricht, wobei zumindest die zweite Formhälfte aus einem metallischen Werkstoff besteht, der ein Elastizitätsmodul mit einem Wert zwischen 190 GPa bis 230 GPa aufweist;
   - Bereitstellen einer weiteren Gussform zur Herstellung einer duroplastischen Beschichtung auf dem Trägerteil, wobei hierfür eine dritten Formhälfte vorgesehen ist, die zusammen mit der zweiten Formhälfte eine Beschichtungskavität ausbildet, die der Geometrie und den Abmessungen des mit der Beschichtung versehenen Trägerteils entspricht;
   - Einspritzen einer plastifizierten, thermoplastischen Zusammensetzung in die Trägerteilkavität der ersten Gussform zur Herstellung des Trägerteils, wobei die thermoplastische Zusammensetzung in der Trägerteilkavität abkühlt und zu dem Trägerteil erstarrt;
   - Verbringen der zweiten Formhälfte zu der dritten Formhälfte zur Ausbildung der weiteren Gussform, wobei das hergestellte Trägerteil an der zweiten Formhälfte und innerhalb der Beschichtungskavität angeordnet ist oder wird;
   - Aufbringen der duroplastischen Beschichtung durch Einspritzen einer reaktiven duroplastischen Zusammensetzung in die Beschichtungskavität, wobei die duroplastische Zusammensetzung auf der Oberfläche des Trägerteils zu der duroplastischen Beschichtung auspolymerisiert und sich mit dem Trägerteil verbindet;
   - Entformen des beschichteten Verkleidungsteils aus der weiteren Gussform;
wobei zumindest der der Beschichtungskavität zugewandte Bereich der dritten Formhälfte aus einem metallischen Werkstoff besteht, der ein Elastizitätsmodul mit einem Wert zwischen 40 GPa bis 135 GPa aufweist.

Üblicherweise würde man zwei Formhälften, die zusammen eine Gussform bilden, jeweils aus einem einheitlichen metallischen Werkstoff ausbilden, um Beeinträchtigungen aufgrund von unterschiedlichen

Wärmeausdehnungskoeffizienten von unterschiedlichen metallischen Werkstoffen zu vermeiden. Es wurde jedoch erkannt, dass durch das verringerte Elastizitätsmodul des metallischen Werkstoffs der dritten Formhälfte im Vergleich zur zweiten Formhälfte, der Einspritzdruck der duroplastischen Zusammensetzung zu einer größeren elastischen Verformung der dritten Formhälfte im Vergleich zur zweiten Formhälfte führt. Aufgrund dieser größeren elastischen Verformbarkeit der dritten Formhälfte, basierend auf dem geringeren Elastizitätsmodul mit einem Wert zwischen 40 GPa bis 135 GPa des gewählten metallischen Werkstoffs, wird durch das elastische Rückfedern dieses metallischen Werkstoffs der Volumenschwund der duroplastischen Zusammensetzung bei deren Auspolymerisation in ausreichendem Maß kompensiert. Somit kann dann auf einen zusätzlichen Prägevorgang verzichtet werden.

Es kann vorgesehen sein, dass die gesamte dritte Formhälfte aus einem metallischen Werkstoff besteht, der ein Elastizitätsmodul mit einem Wert zwischen 40 GPa bis 135 GPa aufweist. Wobei der Begriff "die gesamte" sich nicht auf Anbauteile, Befestigungselemente, Kühlleitungen oder andere periphere Elemente der Formhälfte erstreckt.

Es kann insbesondere vorgesehen sein, dass das herzustellende beschichtete Verkleidungsteil eines Fahrzeugs ein Außenverkleidungsteil ist, insbesondere ein Kühlerschutzgitter oder ein Frontpanel oder eine Stoßfängerverkleidung oder eine Spoileraußenhaut oder eine Schwellerverkleidung oder eine Kotflügelverkleidung ist.

Ein Frontpanel ist derjenige Teil eines Fahrzeugs an deren Stelle sich bei Verbrennungsfahrzeugen der Kühlergrill befunden hat. Insbesondere bei Elektrofahrzeugen ist dieses Frontpanel nicht mehr als Lufteinlass zu dem Kühler (den es hier nicht mehr gibt) ausgebildet, sondern als Designelement in der Fahrzeugmitte vorgesehen.

Es kann vorgesehen sein, dass das Elastizitätsmodul des metallischen Werkstoffs der dritten Formhälfte einen Wert zwischen 65 GPa bis 120 GPa aufweist.

Es kann vorgesehen sein, dass der der metallische Werkstoff der dritten Formhälfte eine Aluminiumbasislegierung ist.

Es kann vorgesehen sein, dass auch die erste Formhälfte aus einem metallischen Werkstoff besteht, der ein Elastizitätsmodul mit einem Wert zwischen 190 GPa bis 230 GPa aufweist.

Es kann vorgesehen sein, dass der metallische Werkstoff der zweiten Formhälfte oder der metallische Werkstoff der ersten und zweiten Formhälfte eine Eisenbasislegierung, insbesondere ein Stahl ist.

Es kann vorgesehen sein, dass zwei zweite Formhälften vorgesehen sind, die wechselweise für die erste Gussform oder für die zweite Gussform eingesetzt werden. Die beiden zweiten Formhälften können dabei beispielsweise über einen Drehteller, eine Wendeplatte, einen Verfahreinheit oder einen Roboter zwischen den beiden Gussformen gewechselt werden.

Es kann vorgesehen sein, dass die der Beschichtungskavität gegenüberliegende Oberfläche der dritten Formhälfte eine Vergütungsschicht und/oder eine Oberflächenhärtung aufweist.

Es kann vorgesehen sein, dass das Einspritzen der reaktiven duroplastischen Zusammensetzung mit einem Einspritzdruck im Bereich von 40 bar bis 120 bar erfolgt.

Es kann vorgesehen sein, dass die duroplastische Zusammensetzung beim Auspolymerisieren einen Volumenschwund im Bereich von 1% bis 5% aufweist.

Es kann vorgesehen sein, dass die reaktive duroplastische Zusammensetzung ein Polyurethanstoffgemisch oder ein Polyureastoffgemisch umfasst, sodass sich eine duroplastische Beschichtung bildet, die Polyurethan oder Polyurea umfasst.

Es kann vorgesehen sein, dass die thermoplastische Zusammensetzung ein Acrylester-Styrol-Acrylnitril (ASA), Polysulfon (PSU), Poly(ethersulfon) (PES), Polyetherimid (PEI), Poly(phenylensulfid) (PPS), Polyphenylen-sulfon (PPSU), Polyetheretherketon (PEEK), Polyetherketone (PEK), Polyamidimid (PAI), Poly-m-phenylenisophthalamid (PMI), Polyphthalamide (PPA), Polybenzimidazole (PBI), Polytetrafluorethylen (PTFE), Perfluoralkoxylalkan (PFA), Polyoxymethylen (POM), Polyamid (PA), Polyethylenterephthalat (PET), Polybutylenterephtalat (PBT), Polymethylmethacrylat (PMMA), Polystyrol (PS), Syndiotaktisches Polystyrol (sPS), Polycarbonat (PC), Styrol-Acrylnitril-Copolymer (SAN), Polyphenylenether (PPE), Ethy-len-Propylen-Dien-Kautschuk (EPDM), Acrylnitril-Butadien-Styrol (ABS), Polylactat (PLA), Polyethylen (PE), Polypropylen (PP), Polyvinylchlorid (PVC) umfasst oder Mischungen oder Blends der vorgenannten Materialen umfasst.

Es kann vorgesehen sein, dass das Trägerteil eine Wanddicke in einem Bereich zwischen 1,0 mm bis 4,5 mm aufweist.

Es kann vorgesehen sein, dass die duroplastische Beschichtung eine Wanddicke in einem Bereich zwischen 0,5 mm bis 4,5 mm aufweist.

### Ausführungsbeispiele

Im Folgenden wird die Erfindung anhand lediglich ein Ausführungsbeispiel darstellender Zeichnungen erläutert. Es zeigen schematisch:

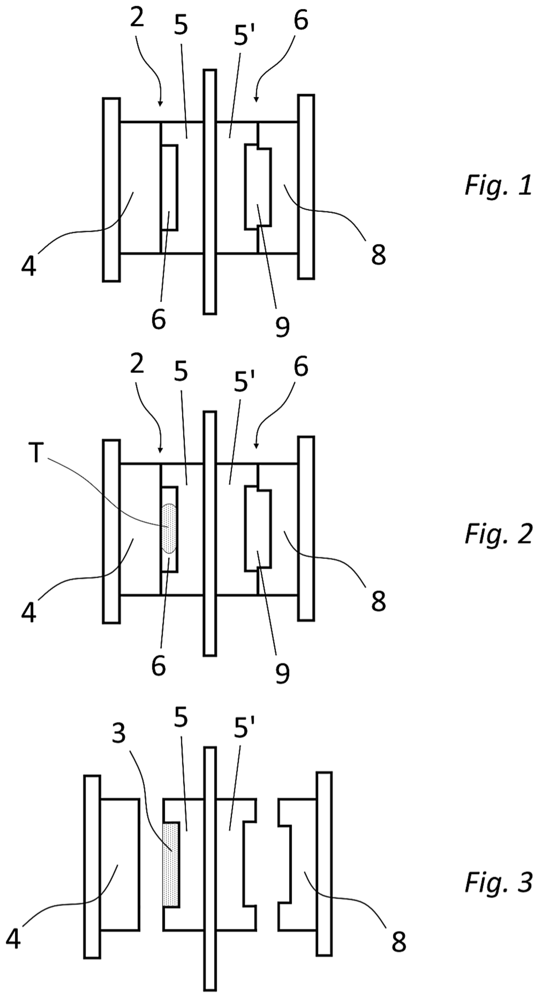

- Fig. 1 bis 6: verschiedene schematische Ansichten der Gussformen während unterschiedlicher Verfahrensschritte des erfindungsgemäßen Verfahrens.

In den Figuren werden gleiche oder funktionsgleiche Elemente mit den gleichen Bezugszeichen versehen.

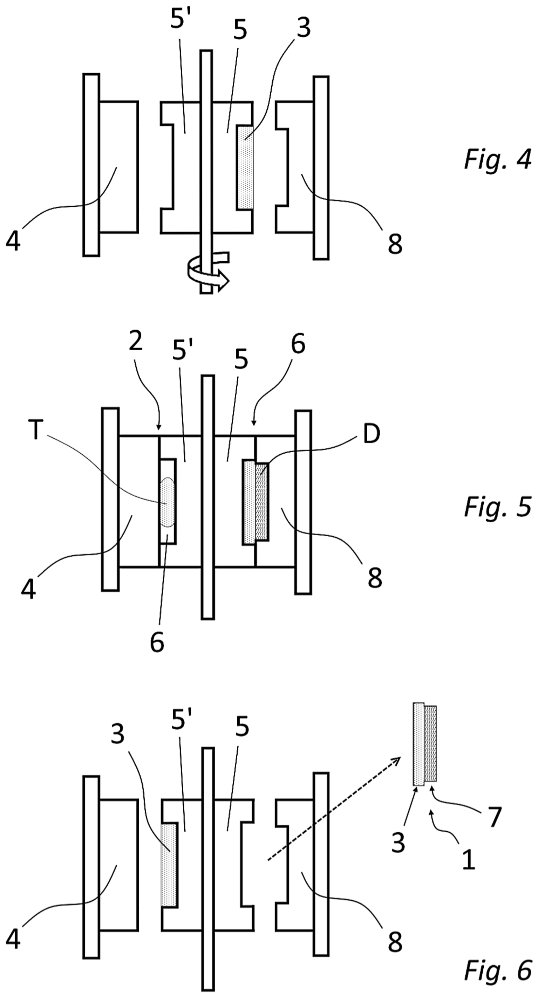

Ein Verfahren zur Herstellung eines beschichteten Verkleidungsteils 1 eines Fahrzeugs, insbesondere eines Außenverkleidungsteils eines Fahrzeugs, umfasst die folgenden Schritte:
- Bereitstellen einer ersten Gussform 2 zur Herstellung eines thermoplastischen Trägerteils 3 des Verkleidungsteils 1, wobei die Gussform 2 eine erste Formhälfte 4 und wenigstens eine zweite Formhälfte 5 aufweist, die zusammen eine Trägerteilkavität 6 ausbilden, die der Geometrie und den Abmessungen des herzustellenden Trägerteils 3 entspricht, wobei zumindest die zweite Formhälfte 5, 5' aus einem metallischen Werkstoff besteht, der ein Elastizitätsmodul mit einem Wert zwischen 190 GPa bis 230 GPa aufweist (vgl. Fig. 1);
- Bereitstellen einer weiteren Gussform 6 zur Herstellung einer duroplastischen Beschichtung 7 auf dem Trägerteil 3, wobei hierfür eine dritten Formhälfte 8 vorgesehen ist, die zusammen mit der zweiten Formhälfte 5' eine Beschichtungskavität 9 ausbildet, die der Geometrie und den Abmessungen des mit der Beschichtung 7 versehenen Trägerteils 3 entspricht (vgl. Fig. 1);
- Einspritzen einer plastifizierten, thermoplastischen Zusammensetzung T in die Trägerteilkavität 6 der ersten Gussform 2 zur Herstellung des Trägerteils 3, wobei die thermoplastische Zusammensetzung T in der Trägerteilkavität 6 abkühlt und zu dem Trägerteil 3 erstarrt (vgl. Fig. 2 und Fig. 3);
- Verbringen der zweiten Formhälfte 5 zu der dritten Formhälfte 8 zur Ausbildung der weiteren Gussform 6, wobei das hergestellte Trägerteil 3 an der zweiten Formhälfte 5 und innerhalb der Beschichtungskavität 9 angeordnet ist (vgl. Fig. 4);
- Aufbringen der duroplastischen Beschichtung 7 durch Einspritzen einer reaktiven duroplastischen Zusammensetzung D in die Beschichtungskavität 9, wobei die duroplastische Zusammensetzung D auf der Oberfläche des Trägerteils 3 zu der duroplastischen Beschichtung 7 auspolymerisiert und sich mit dem Trägerteil 3 verbindet (vgl. Fig. 5);
- Entformen des beschichteten Verkleidungsteils 1 aus der weiteren Gussform 6 (vgl. Fig. 6);
wobei zumindest der der Beschichtungskavität 9 zugewandte Bereich der dritten Formhälfte 8 aus einem metallischen Werkstoff besteht, der ein Elastizitätsmodul mit einem Wert zwischen 40 GPa bis 135 GPa aufweist.

Bei der Wiederholung der Verfahrensschritte ist nunmehr in einer weiteren zweiten Formhälfte 5' bereits das zeitgleich zum Aufbringen der duroplastischen Beschichtung 7 gespritzte neue Trägerteil 3 angeordnet (vgl. Fig. 6 linke Seite) und wird zur Ausbildung der weiteren Gussform 6 zu der dritten Formhälfte 8 verbracht (hier nicht mehr näher dargestellt). Es sind also zwei zweite Formhälften 5, 5' vorgesehen, die wechselweise für die erste Gussform 2 oder für die zweite Gussform 6 eingesetzt werden.

Das Elastizitätsmodul des metallischen Werkstoffs der dritten Formhälfte 8 weist einen Wert zwischen 65 GPa bis 120 GPa auf.

Der metallische Werkstoff der dritten Formhälfte 8 ist eine Aluminiumbasislegierung.

Die erste Formhälfte 4 besteht aus einem metallischen Werkstoff, der ein Elastizitätsmodul mit einem Wert zwischen 190 GPa bis 230 GPa aufweist.

Die der Beschichtungskavität 9 gegenüberliegende Oberfläche der dritten Formhälfte 8 weist eine Vergütungsschicht und/oder eine Oberflächenhärtung auf.

Das Einspritzen der reaktiven duroplastischen Zusammensetzung D erfolgt mit einem Einspritzdruck im Bereich von 40 bar bis 120 bar.

Die duroplastische Zusammensetzung D weist beim Auspolymerisieren einen Volumenschwund im Bereich von 1% bis 5% auf.

Die reaktive duroplastische Zusammensetzung D umfasst ein Polyurethanstoffgemisch oder ein Polyureastoffgemisch, sodass sich eine duroplastische Beschichtung 7 bildet, die Polyurethan oder Polyurea umfasst.

Die thermoplastische Zusammensetzung T umfasst ein Acrylester-Styrol-Acrylnitril (ASA), Polysulfon (PSU), Poly(ethersulfon) (PES), Polyetherimid (PEI), Poly(phenylensulfid) (PPS), Polyphenylensulfon (PPSU), Polyetheretherketon (PEEK), Polyetherketone (PEK), Polyamidimid (PAI), Poly-m-phenylenisophthalamid (PMI), Polyphthalamide (PPA), Polybenzimidazole (PBI), Polytetrafluorethylen (PTFE), Perfluoralkoxylalkan (PFA), Polyoxymethylen (POM), Polyamid (PA), Polyethylenterephthalat (PET), Polybutylenterephtalat (PBT), Polymethylmethacrylat (PMMA), Polystyrol (PS), Syndiotaktisches Polystyrol (sPS), Polycarbonat (PC), Styrol-Acrylnitril-Copolymer (SAN), Polyphenylenether (PPE), Ethylen-Propylen-Dien-Kautschuk (EPDM), Acrylnitril-Butadien-Styrol (ABS), Polylactat (PLA), Polyethylen (PE), Polypropylen (PP) oder umfasst Mischungen oder Blends der vorgenannten Materialen.

## Patentansprüche

1. Verfahren zur Herstellung eines beschichteten Verkleidungsteils (1) eines Fahrzeugs, insbesondere eines Außenverkleidungsteils eines Fahrzeugs, wobei das Verfahren die folgenden Schritte umfasst:
- Bereitstellen einer ersten Gussform (2) zur Herstellung eines thermoplastischen Trägerteils (3) des Verkleidungsteils (1), wobei die Gussform (2) eine erste Formhälfte (4) und wenigstens eine zweite Formhälfte (5, 5') aufweist, die zusammen eine Trägerteilkavität (6) ausbilden, die der Geometrie und den Abmessungen des herzustellenden Trägerteils (3) entspricht, wobei zumindest die zweite Formhälfte (5, 5') aus einem metallischen Werkstoff besteht, der ein Elastizitätsmodul mit einem Wert zwischen 190 GPa bis 230 GPa aufweist;
- Bereitstellen einer weiteren Gussform (6) zur Herstellung einer duroplastischen Beschichtung (7) auf dem Trägerteil (3), wobei hierfür eine dritten Formhälfte (8) vorgesehen ist, die zusammen mit der zweiten Formhälfte (5, 5') eine Beschichtungskavität (9) ausbildet, die der Geometrie und den Abmessungen des mit der Beschichtung (7) versehenen Trägerteils (3) entspricht;
- Einspritzen einer plastifizierten, thermoplastischen Zusammensetzung (T) in die Trägerteilkavität (6) der ersten Gussform (2) zur Herstellung des Trägerteils (3), wobei die thermoplastische Zusammensetzung (T) in der Trägerteilkavität (6) abkühlt und zu dem Trägerteil (3) erstarrt;
- Verbringen der zweiten Formhälfte (5, 5') zu der dritten Formhälfte (8) zur Ausbildung der weiteren Gussform (6), wobei das hergestellte Trägerteil (3) an der zweiten Formhälfte (5, 5') und innerhalb der Beschichtungskavität (9) angeordnet ist oder wird;
- Aufbringen der duroplastischen Beschichtung (7) durch Einspritzen einer reaktiven duroplastischen Zusammensetzung (D) in die Beschichtungskavität (9), wobei die duroplastische Zusammensetzung (D) auf der Oberfläche des Trägerteils (3) zu der duroplastischen Beschichtung (7) auspolymerisiert und sich mit dem Trägerteil (3) verbindet;
- Entformen des beschichteten Verkleidungsteils (1) aus der weiteren Gussform (6);
**dadurch gekennzeichnet, dass**
zumindest der der Beschichtungskavität (9) zugewandte Bereich der dritten Formhälfte (8) aus einem metallischen Werkstoff besteht, der ein Elastizitätsmodul mit einem Wert zwischen 40 GPa bis 135 GPa aufweist.

2. Verfahren nach Anspruch 1, **dadurch gekennzeichnet, dass** das Elastizitätsmodul des metallischen Werkstoffs der dritten Formhälfte (8) einen Wert zwischen 65 GPa bis 120 GPa aufweist.

3. Verfahren nach Anspruch 1 oder 2, **dadurch gekennzeichnet, dass** der metallische Werkstoff der dritten Formhälfte (8) eine Aluminiumbasislegierung ist.

4. Verfahren nach einem der vorstehenden Ansprüche, **dadurch gekennzeichnet, dass** auch die erste Formhälfte (4) aus einem metallischen Werkstoff besteht, der ein Elastizitätsmodul mit einem Wert zwischen 190 GPa bis 230 GPa aufweist.

5. Verfahren nach einem der vorstehenden Ansprüche, **dadurch gekennzeichnet, dass** zwei zweite Formhälften (5, 5') vorgesehen sind, die wechselweise für die erste Gussform (2) oder für die zweite Gussform (6) eingesetzt werden.

6. Verfahren nach einem der vorstehenden Ansprüche, **dadurch gekennzeichnet, dass** die der Beschichtungskavität (9) gegenüberliegende Oberfläche der dritten Formhälfte (8) eine Vergütungsschicht und/oder eine Oberflächenhärtung aufweist.

7. Verfahren nach einem der vorstehenden Ansprüche, **dadurch gekennzeichnet, dass** das Einspritzen der reaktiven duroplastischen Zusammensetzung (D) mit einem Einspritzdruck im Bereich von 40 bar bis 120 bar erfolgt.

8. Verfahren nach einem der vorstehenden Ansprüche, **dadurch gekennzeichnet, dass** die duroplastische Zusammensetzung (D) beim Auspolymerisieren einen Volumenschwund im Bereich von 1% bis 5% aufweist.

9. Verfahren nach einem der vorstehenden Ansprüche, **dadurch gekennzeichnet, dass** die reaktive duroplastische Zusammensetzung (D) ein Polyurethanstoffgemisch oder ein Polyureastoffgemisch umfasst, sodass sich eine duroplastische Beschichtung (7) bildet, die Polyurethan oder Polyurea umfasst.

10. Verfahren nach einem der vorstehenden Ansprüche, **dadurch gekennzeichnet, dass** die thermoplastische Zusammensetzung (T) ein Acrylester-Styrol-Acrylnitril (ASA), Polysulfon (PSU), Poly(ethersulfon) (PES), Polyetherimid (PEI), Poly(phenylensulfid) (PPS), Polyphenylensulfon (PPSU), Polyetheretherketon (PEEK), Polyetherketone (PEK), Polyamidimid (PAI), Poly-m-phenylenisophthalamid (PMI), Polyphthalamide (PPA), Polybenzimidazole (PBI), Polytetrafluorethylen (PTFE), Perfluoralkoxylalkan (PFA), Polyoxymethylen (POM), Polyamid (PA), Polyethylenterephthalat (PET), Polybutylenterephtalat (PBT), Polymethylmethacrylat (PMMA), Polystyrol (PS), Syndiotaktisches Polystyrol (sPS), Polycarbonat (PC), Styrol-Acrylnitril-Copolymer (SAN), Polyphenylenether (PPE), Ethylen-Propylen-Dien-Kautschuk (EPDM), Acrylnitril-Butadien-Styrol (ABS), Polylactat (PLA), Polyethylen (PE), Polypropylen (PP) umfasst oder Mischungen oder Blends der vorgenannten Materialen umfasst.
